(19) Europäisches Patentamt
European Patent Office
Office européen des brevets

(11) **EP 4 656 676 A2**

(12) **EUROPEAN PATENT APPLICATION**

(43) Date of publication:
**03.12.2025 Bulletin 2025/49**

(21) Application number: **25179521.7**

(22) Date of filing: **04.11.2021**

(51) International Patent Classification (IPC):
***C08J 11/04*** *(2006.01)*

(52) Cooperative Patent Classification (CPC):
(C-Sets available)
**C08G 18/163; C08G 18/10; C08G 18/2027; C08G 18/222; C08G 18/302; C08G 18/3206; C08G 18/4854; C08G 18/6674; C08G 18/6677; C08G 18/7671;** C08G 2101/00; C08G 2110/0008; C08G 2110/0066; C08G 2110/0083          (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2020 EP 20205810**

(62) Document number(s) of the earlier application(s) in accordance with Art. 76 EPC:
**21801946.1 / 4 240 783**

(71) Applicant: **Huntsman International LLC The Woodlands, TX 77380 (US)**

(72) Inventors:
• **VANROY, Bram**
  **3300 Tienen (BE)**
• **VERBEKE, Hugo**
  **3300 Tienen (BE)**
• **JANSSENS, Bert**
  **3300 Tienen (BE)**
• **VAN LOOY, Kevin**
  **3300 Tienen (BE)**

(74) Representative: **Lee, Alexander Mark Huntsman (Europe) BV Grijpenlaan 18 3300 Tienen (BE)**

Remarks:
•This application was filed on 28.05.2025 as a divisional application to the application mentioned under INID code 62.
•Claims filed after the date of filing of the application / after the date of receipt of the divisional application (Rule 68(4) EPC)

(54) **ELASTOMERIC POLYURETHANE-POLYUREA COMPRISING WATER BLOWN FOAM HAVING IMPROVED MECHANICAL PROPERTIES**

(57)     A polyurethane-polyurea comprising water blown foam having an apparent density in the range 30-700 kg/m$^3$ measured according to ISO 845 and having a tensile strength (measured according to DIN 53504) over apparent density ratio of at least 10 kPa.m$^3$/kg.

These foams are very suitable for use in footwear and automotive and more in particular in applications aiming for consumer comfort.

EP 4 656 676 A2

(52) Cooperative Patent Classification (CPC): (Cont.)

C-Sets
**C08G 18/10, C08G 18/302;**
**C08G 18/10, C08G 18/3206;**
**C08G 18/10, C08G 18/48**

**Description**

FIELD OF INVENTION

The present invention relates to a polyurethane-polyurea comprising water blown foam having an apparent density in the range 30-700 kg/m$^3$ measured according to ISO 845 and having a tensile strength (measured according to DIN 53504) over apparent density ratio of at least 10 kPa.m$^3$/kg.

The foams have elastomeric behaviour and improved mechanical properties such as tensile strength and ball rebound which make them very suitable for use in footwear and automotive and more in particular in applications aiming for consumer comfort.

BACKGROUND OF THE INVENTION

Current state of the art elastomeric flexible foams having densities in the range 200-300 kg/m$^3$ suffer from rather disappointing mechanical properties such as tensile strength and ball rebound. Typical examples of these elastomeric flexible foams can be found in US2012/0095122A1.

Furthermore, conventional low density elastomeric flexible polyurethane foams are typically produced using isocyanate reactive compounds with a functionality higher than 2 and with very high water contents in order to have stability during foaming and to achieve the required mechanical properties and density. It is known that the use of isocyanate reactive compounds with a functionality higher than 2 will give rise to a cross-linked polyurethane matrix. This renders conventional low-density flexible polyurethane foams behaving as thermoset materials rather than thermoplastic materials. Furthermore, the combination of typical compounds used to form said foams result in materials having very low tensile strength. Typical examples of low-density foams can be found in CA2337913A1.

To solve above problems, there is a need to produce an elastomeric flexible foam which has improved mechanical properties such as tensile strength and ball rebound for a given density. The solution provided to solve this problem still allows formulators a large degree of freedom. Optionally a specific version of the elastomeric polyurethane flexible foam can be made which is thermoplastic and thereby is thermally recyclable (e.g. via extrusion) and/or melt reprocessable after its service-life.

AIM OF THE INVENTION

The goal is to achieve an elastomeric polyurethane flexible foam which has for a given density a higher tensile strength (measured according to DIN 53504) and higher ball rebound (measured according to ISO 8307 and also referred to as resilience) compared to state of the art elastomeric polyurethane foams. Especially for foams in the range 200-300 kg/m$^3$ there is a need to develop foams having higher tensile strength and higher ball rebound while maintaining hardness and angle tear.

The ultimate goal is to develop an elastomeric polyurethane flexible foam, more in particular a thermoplastic elastomeric polyurethane flexible foam having a density in the range 200-300 kg/m$^3$ which has a tensile strength, a ball rebound and/or compression set which is typical for state of the art elastomeric thermoplastic polyurethane flexible foams having densities in the range 300-500 kg/m$^3$.

Throughout the description, the improved characteristic of the foam according to the invention having a higher tensile strength at a given density is indicated as a tensile strength over apparent density ratio.

It is a further goal to develop a reactive mixture suitable for making an elastomeric polyurethane flexible foam which has an apparent density in the range 30-700 kg/m$^3$ measured according to ISO 845 and having a tensile strength (measured according to DIN 53504) over apparent density ratio of at least 10 kPa.m$^3$/kg.

Additionally, it is the goal to develop an elastomeric thermoplastic polyurethane flexible foam which is thermally recyclable (e.g. via extrusion) and/or melt reprocessable after its service-life.

DEFINITIONS AND TERMS

In the context of the present invention, the following terms have the following meaning:

1) **"NCO value"** or **"isocyanate value"** as referred to herein is the weight percentage of reactive isocyanate (NCO) groups in an isocyanate, modified isocyanate or isocyanate prepolymer compound.

2) The expression **"isocyanate-reactive hydrogen atoms"** as used herein for the purpose of calculating the isocyanate index refers to the total of active hydrogen atoms in hydroxyl and amine groups present in the reactive compositions; this means that for the purpose of calculating the isocyanate index at the actual polymerisation process, one hydroxyl group is considered to comprise one reactive hydrogen, one primary amine group is considered to comprise one reactive hydrogen and one water molecule is considered to comprise two active hydrogens.

3) The **"isocyanate index"** or **"NCO index"** or **"index"** as referred to herein is the ratio of available NCO-equivalents in the reactive mixture to the sum of available equivalents of isocyanate-reactive hydrogen atoms present in the reactive mixture, given as a percentage:

$$\frac{[NCO] \times 100}{[active\ hydrogen]} \qquad (\%)$$

In other words, the NCO-index expresses the percentage of isocyanate actually used in a formulation (reactive mixture) with respect to the amount of isocyanate theoretically required for reacting with the amount of isocyanate-reactive hydrogen used in a formulation (reactive mixture). In the specific case where an isocyanate prepolymer is used in the reactive mixture, it is clear that a part of the NCO-equivalents and equivalents of isocyanate-reactive hydrogen atoms is no longer available to participate in the reaction. Theses "consumed" equivalents used in the making of the isocyanate prepolymer should thus not be considered in the calculation of the isocyanate index.

4) The term **"average nominal functionality of a compound"** (or in short "functionality") is used herein to indicate the number average of functional groups per molecule in a composition. It reflects the real and practically/analytically determinable number average functionality of a chemical structure. In case of the "average nominal hydroxyl functionality" (or in short "hydroxyl functionality") it is used to indicate the number average hydroxyl functionality (number of hydroxyl groups per molecule) of the polyol or polyol composition on the assumption that it is the real and practically/analytically determinable number average functionality. This functionality is in some cases lower than the theoretically determined functionality (number of active hydrogen atoms per molecule) of the initiator(s) sometimes used in their preparation.

5) The term **"average nominal functionality of a composition"** (or in short "functionality of a composition") is used herein to indicate the number average of functional groups per molecule in a composition. It reflects the real and practically/analytically determinable number average functionality of a composition. In case of a blend of materials (isocyanate blend, polyol blend, reactive foam mixture) the "average nominal functionality" of the blend is identical to the "molecular number average functionality" calculated via the total number of molecules of the blend in the denominator. It thereby requires using the real and practically/analytically determinable number average functionality of each of the chemical compounds of the blend. In case of a reactive foam formulation, the molecular number average functionality of the complete reactive composition should be taken into account (thus including all isocyanate and isocyanate reactive compounds, thereby referring to the compounds contributing to the number of equivalents A, B, C, D and/or E as explained/used further on in the description).

6) The term **"hardblock"** refers to 100 times the ratio of the amount (in pbw) of polyisocyanate + isocyanate-reactive compounds having a molecular weight less than 500 g/mol (wherein isocyanate-reactive compounds having a molecular weight of more than 500 g/mol incorporated in the polyisocyanates are not taken into account) over the amount (in pbw) of all polyisocyanate and all isocyanate-reactive compounds used. The hardblock content is expressed in %.

7) The term **"urea hardblock"** refers to that part of the "hardblock" formed from the reaction of urea forming isocyanate-reactive compounds having a molecular weight less than 500 g/mol. The urea hardblock content is expressed in %.

8) The term **"urethane hardblock"** refers to that part of the "hardblock" formed from the reaction of urethane forming isocyanate-reactive compounds having a molecular weight less than 500 g/mol. The urethane hardblock content is expressed in %.

9) The word **"average"** refers to number average unless indicated otherwise.

10) As used herein, the term **"thermoplastic"** is used in its broad sense to designate a material that is reprocessable at an elevated temperature, whereas "thermoset" designates a material that exhibits high temperature stability but without such reprocessability at elevated temperatures. Thermoset materials typically degrade before melting giving them almost no reprocessability at melting temperature.

11) The term **"elastomeric material"** or **"elastomer"** as determined according to ASTM D1566 designates a material which, at room temperature, is capable of recovering substantially in shape and size after removal of a deforming force.

12) The term **"difunctional"** as used herein means that the average nominal functionality is about 2. A difunctional polyol (also referred to as a diol) refers to a polyol having an average nominal hydroxyl functionality of about 2 (including values in the range 1.9 up to 2.1). A difunctional isocyanate refers to an isocyanate composition having an average nominal isocyanate functionality of about 2 (including values in the range 1.9 up to 2.1).

13) The term **"polyurethane",** as used herein, is not limited to those polymers which include only urethane or polyurethane linkages. It is well understood by those of ordinary skill in the art of preparing polyurethanes that the polyurethane polymers may also include allophanate, carbodiimide, uretidinedione, and other linkages in addition to urethane linkages.

14) The expressions **"Reaction system", "Reactive foam formulation", "Reactive formulation"** and **"Reactive mixture"** are interchangeable used herein and all refer to a combination of reactive compounds used to make the polyurethane comprising foam according to the invention wherein the polyisocyanate compounds are usually kept in one or more containers separate from the isocyanate-reactive compounds before reaction.

15) The term **"room temperature"** refers to temperatures of about 20°C, this means referring to temperatures in the range 18°C to 25°C. Such temperatures will include 18°C, 19°C, 20°C, 21°C, 22°C, 23°C, 24°C and 25°C.

16) Unless otherwise expressed, the **"weight percentage"** (indicated as **%wt** or **wt %**) of a component in a composition refers to the weight of the component over the total weight of the composition in which it is present and is expressed as percentage.

17) Unless otherwise expressed, **"parts by weight" (pbw)** of a component in a composition refers to the weight of the component over the total weight of the composition in which it is present and is expressed as pbw.

18) Unless otherwise specified, **"CLD hardness"** and **"CLD 40"** refer to Compression Load Deflection at 40 % compression measured according to ISO 3386-1/2.

19) **"Resilience"** (also referred to as ball rebound) is measured according to ISO 8307 and is expressed in % with the provisio that the resilience is measured on non-crushed samples.

20) **"Tear strength"** and **"Angle tear strength"** as referred to herein is measured according to ISO 34-1 (without using a cut) and is expressed in N/m. Tear strength in general and more in particular angle tear strength measures the ability of a foam to resist tearing or shredding. This is important in applications where foams must be handled frequently, such as in upholstering.

21) **"Tensile strength"** and **"elongation"** as referred to herein is measured according to DIN 53504 and is expressed in MPa (tensile strength) and % (elongation). The test is performed using a S1 specimen type and a test speed of 100 mm/min.

22) The **"density"** of a foam is referring to the apparent density as measured on foam samples by cutting a parallelepiped of foam, weighing it and measuring its dimensions. The apparent density is the weight to volume ratio as measured according to ISO 845 and is expressed in kg/m$^3$. If the apparent density is used to calculate the tensile strength / apparent density ratio then the apparent density is referring to the density of the part used to measure the tensile strength (for example a moulded foam).

23) The term **"difunctional polyol"** refers to a polyol having an average hydroxyl functionality of about 2, preferably in the range 1.9 - 2.1. A difunctional polyol (diol) composition according to the present invention is not permitted to have an average hydroxyl functionality of more than 2.2 and not permitted to have an average hydroxyl functionality of less than 1.8.

24) A **"physical blowing agent"** herein refers to permanent gasses such as $CO_2$, $N_2$ and air as well as volatile compounds (low boiling inert liquids) that expand the polyurethane polymer by vaporization during the polyurethane formation. Examples of suitable volatile compounds include but are not limited to chloro fluoro carbons (CFCs), hydro fluoro carbons (HFCs), hydro chloro fluoro carbons (HCFCs), hydro fluoro olefins (HFO's), Hydro Chloro Fluoro Olefins (HCFO's), and hydrocarbons such as pentane, isopentane and cyclopentane. The bubble/foam-making process is irreversible and endothermic, i.e. it needs heat (e.g. from the chemical reaction exotherm) to volatilize a (low boiling) liquid blowing agent.

25) A **"chemical blowing agent"** includes compounds that decompose under processing conditions and expand the polyurethane polymer by the gas produced as a side product.

26) **"In-situ polymerisation"** and **"in-situ foaming"** as used herein refers to a process wherein at least two liquid compositions (typically an isocyanate composition with an isocyanate reactive composition) are mixed to form a reactive mixture and allowed to foam. In-situ polymerisation can be performed using injection moulding (comprising compression moulding), slabstock (free foaming in an open mould), spray foaming, ...

27) **"PU/PUR foam"**, **"Polyurea/Polyurethane foam"** and **"Polyurea/Polyurethane comprising foam"** refers to a foam having polyurethane and polyurea building blocks in its matrix.

28) **"High Molecular weight isocyanate reactive compounds"** and **"high MW isocyanate reactive compounds"** refer herein to isocyanate reactive compounds having a molecular weight > 500 g/mol having isocyanate reactive functional group(s) and a functionality in the range 1.8 up to 2.5. Examples are polyols, amines or other isocyanate reactive compounds with a molecular weight > 500 g/mol. These compounds have at least 1 isocyanate reactive hydrogen atom.

29) **"Low Molecular Weight urethane forming compounds"** and **"low MW urethane forming compounds"** refers herein to compounds having at least 1 urethane forming equivalent of an hydroxyl functional group, having a molecular weight < 500 g/mol and having a hydroxy functionality in the range 1 up to 8. These compounds are also referred to as polyol chain extender compounds and/or polyol crosslinker compounds and/or mono-alcohol compounds having a molecular weight < 500 g/mol.

30) **"Low Molecular Weight urea forming compounds"** and **"low MW urea forming compounds"** refers herein to compounds having at least 1 urea forming equivalent of an amine functional group, having a molecular weight < 500 g/mol and having a functionality in the range 1 up to 8. These compounds are also referred to as amine chain extender compounds and/or amine crosslinker compounds and/or mono-amine compounds having a molecular weight < 500 g/mol.

31) **"urea forming equivalents"** and **"urethane forming equivalents"** refers to the number of equivalents to respectively form 1 urea or 1 urethane equivalent. In the case of water 2 isocyanate equivalents are consumed during reaction but only 1 urea compound is formed. In the specific case, a chemical structure contains both isocyanate reactive groups that can form urea and urethane (e.g. alkanolamines). It will contribute both to the urea and urethane forming equivalents with the equivalents calculated from the respective reactive groups. This definition allows to calculate the number of C, D and E equivalents as described in the current invention.

32) **"Injection moulding"** and **"reactive injection moulding"** (RIM) refers to a process (typically involving high-pressure impingement) wherein two liquid compositions are mixed to form a reactive mixture and immediately injected into a preformed mould. The components chemically react to form a polyurethane foam which takes the shape of the mould.

33) **"Water blown foam"** refers herein to a foam which is foamed using at least water as blowing agent. The amount of water used in a water blown foam is preferably in the range 20 up to 100 wt% based on the total weight of all blowing agents used. Beside water used as blowing agent, there might be other blowing agents added to the reactive mixture, said additional blowing agents may be selected from chemical and/or physical blowing agents but should not exceed more than 80 wt%, preferably not more than 60 wt%, preferably not more than 40 wt%, more preferably not more than 20 wt% based on the total amount of blowing agents used (including water).

DETAILED DESCRIPTION

The present invention discloses elastomeric polyurethane-polyurea comprising water blown foams which have surprisingly good mechanical properties such as tensile strength and ball rebound and are easily melt-reprocessable and recyclable after use. These flexible polyurethane foams are thermoplastic polyurethane (TPU) foams which are polymerised and blown in-situ and which can be recycled after service-life (use) by means of a thermal treatment above the melt temperature of the thermoplastic polyurethane material. Said foam having an apparent density in the range 30-700 kg/m$^3$ measured according to ISO 845 and having a tensile strength (measured according to DIN 53504) over apparent density ratio of at least 10 kPa.m$^3$/kg.

According to embodiments, the elastomeric PU/PUR foam according to the invention is having a tensile strength (measured according to DIN 53504) over apparent density (ISO 845) ratio of at least 10 kPa.m$^3$/kg, at least 10.5 kPa.m$^3$/kg, at least 11 kPa.m$^3$/kg, at least 11.5 kPa.m$^3$/kg, at least 12 kPa.m$^3$/kg, at least 12.5 kPa.m$^3$/kg, at least 13 kPa.m$^3$/kg, at least 13.5 kPa.m$^3$/kg, at least 14 kPa.m$^3$/kg.

According to embodiments, the elastomeric PU/PUR foam according to the invention has an apparent density is in the range 30-700 kg/m$^3$, in the range 30-600 kg/m$^3$ or in the range 30-500 kg/m$^3$ measured according to ISO 845.

According to embodiments, the elastomeric PU/PUR foam according to the invention has apparent density is in the range 85-700 kg/m$^3$, in the range 100-600 kg/m$^3$, in the range 120-500 kg/m$^3$, in the range 130-500 kg/m$^3$, in the range 140-500 kg/m$^3$, in the range 150-500 kg/m$^3$ measured according to ISO 845.

According to embodiments, the elastomeric PU/PUR foam according to the invention has urethane hard-block species formed from urethane forming isocyanate reactive species having a molecular weight < 500 g/mol and urea hard-block species formed from urea forming isocyanate reactive species having a molecular weight < 500 g/mol.

According to embodiments, the elastomeric PU/PUR foam according to the invention has urethane and urea hard-block species formed from D equivalents urethane forming isocyanate reactive compounds having a molecular weight < 500 g/mol, E equivalents urea forming isocyanate reactive compounds not being water having a molecular weight < 500 g/mol, and C equivalents urea forming compounds selected from water and wherein the ratio calculated as $\frac{D+E}{C}$ is smaller or equal than 1.4, smaller than 1.2, smaller than 1.1, smaller than 1, smaller than 0.9.

According to embodiments, the elastomeric PU/PUR foam according to the invention has urethane and urea hard-block species formed from D equivalents urethane forming isocyanate reactive compounds having a molecular weight < 500 g/mol, E equivalents urea forming isocyanate reactive compounds not being water having a molecular weight < 500 g/mol, and C equivalents urea forming compounds selected from water and wherein the ratio calculated as $\frac{D+E}{C}$ is larger than 0, larger than 0.05, larger than 0.1, larger than 0.13.

According to embodiments, the elastomeric PU/PUR foam according to the invention has urethane and urea hard-block species formed from D equivalents urethane forming isocyanate reactive species having a molecular weight < 500 g/mol, E equivalents urea forming isocyanate reactive species not being water having a molecular weight < 500 g/mol, and C equivalents urea forming compounds selected from water wherein the ratio calculated as $\frac{D+E}{C}$ is in the range of in the range greater than 0.5 and below 1.4, in the range 0.55 up to 1.2 in the range 0.6 up to 1.1, in the range 0.65 up to 1.0, in the range 0.7 up to 0.9.

According to embodiments, the elastomeric PU/PUR foam according to the invention is an injection moulded foam.

According to embodiments, the elastomeric PU/PUR foam according to the invention is a free risen foam or slabstock foam (performed in e.g. an open mould or conveyor belt).

According to embodiments, the elastomeric PU/PUR foam according to the invention is a sprayed foam using state of the art spray technology for polyurethane foaming.

Due its good dynamic properties the elastomeric PU/PUR foam according to the invention might be used in

- Footwear, shoe soles, midsoles
- Orthopedic products
- As artificial leather
- Mattresses
- Foam seals and gaskets
- Elastomeric wheels and tires
- Automotive suspension, seating
- General upholstery applications and floor covering
- Bicycle saddles
- Lightweight Synthetic fibers
- General and sports clothing and apparel
- Seating and furniture foam
- Grips and handles

• Microcellular foam applications

The invention further provides a method and reactive mixture for making the elastomeric polyurethane-polyurea comprising water blown foams. The reactive mixture of the invention used to make said foam is blown using predominantly water as blowing agents.

The use of the reactive mixture according to the invention will lead to a micro-phase separated polymer morphology, more in particular the formation of a distinctive crystalline hard block phases and a soft block phase. This phase separation contributes to the superior properties of the foam compared to state-of-the-art elastomeric flexible foams.

Therefore, the present invention discloses a method for making an elastomeric polyurethane-polyurea comprising water blown foam (referred herein after as **"PU/PUR foam"**) having an apparent density in the range 30-700 kg/m³ measured according to ISO 845 and having a tensile strength (measured according to DIN 53504) over apparent density ratio of at least 10 kPa.m³/kg, said method comprising mixing at an isocyanate index in the range 75 up to 125 in situ at least following ingredients to form a reactive foam formulation:

- An isocyanate composition comprising A equivalents isocyanate compounds, said isocyanate composition having an NCO value in the range 3 up to 50 and a number average isocyanate functionality in the range of 1.8 up to 2.5, and
- B equivalents isocyanate reactive compounds having a molecular weight > 500 g/mol and a functionality in the range 1.8 up to 2.5 (referred to as high MW isocyanate reactive compounds), and
- C urea forming equivalents of water, and
- Optionally D urethane forming equivalents of low molecular weight (MW) urethane forming isocyanate reactive compounds containing hydroxyl functional groups and having a molecular weight < 500 g/mol and having a hydroxy functionality in the range 1 up to 8, and
- Optionally E urea forming equivalents of low molecular weight (MW) urea forming isocyanate reactive compounds containing amine functional groups and having a molecular weight < 500 g/mol and having a functionality in the range 1 up to 8, and
- At least one catalyst compound, and
- Optionally further additives, additional blowing agents beside water and/or fillers.

Wherein

- C is in the range of 0.02 up to 0.08 calculated on 100 gram reactive foam formulation, and
- D is in the range of 0 up to 0.07 calculated on 100 gram reactive foam formulation, and
- D + E is greater than 0, and

- $\dfrac{D+E}{C}$ is smaller than 1.4, and

- Isocyanate index is in the range 75 up to 125.

According to embodiments, the elastomeric polyurethane-polyurea comprising water blown foam according to the invention is having an apparent density in the range 30-700 kg/m³ measured according to ISO 845, a tensile strength (measured according to DIN 53504) over apparent density ratio of at least 10 kPa.m³/kg and an elongation (measured according to DIN 53504) greater than 400 %.

According to embodiments, the D equivalents of low molecular weight (MW) urethane forming compounds containing hydroxyl functional groups and having a molecular weight < 500 g/mol and having a hydroxy functionality in the range 1 up to 8 (referred to as low MW urethane forming compounds further on) refers to the sum of the urethane forming equivalents of polyol chain extender compounds and/or polyol crosslinker compounds and/or mono-alcohol compounds used.

According to embodiments, the E equivalents of low molecular weight (MW) urea forming compounds containing amine functional groups and having a molecular weight < 500 g/mol and having a functionality in the range 1 up to 8, (referred to as low MW urea forming compounds further on) refers to the sum of the urea forming equivalents of amine chain extender compounds and/or amine crosslinker compounds and/or mono-amine compounds used.

According to embodiments, the required equivalents of compounds B up to E are first combined (to form the so-called "b-side") and then reacted with the polyisocyanate composition.

According to embodiments, the isocyanate index of the reactive foam formulation is in the range 75 up to 125, in the range 80 up to 120, in the range 85 up to 120, in the range 88 up to 120, in the range 90 up to 120, in the range 90 up to 110, in the range 92 up to 110, in the range 95 up to 110, in the range 95 up to 105, in the range 98 up to 105, in the range 98 up to 102.

According to embodiments, the process for making the elastomeric PU/PUR foam according to the invention comprises at least the steps of:

    i. pre-mixing the high MW isocyanate reactive compounds, the low MW urethane forming compounds, the low MW urea forming compounds, the catalyst compounds, water and further additives, additional blowing agents beside water and/or fillers, and then

    ii. mixing the isocyanate composition with the composition obtained in step i) to form a reactive foam formulation, and

    iii. allowing the reactive foam formulation obtained in step ii) to foam, and then

    iv. optionally curing and/or annealing the elastomeric PU/PUR foam obtained in step iii) at an elevated temperature.

According to embodiments, the step of mixing of the polyisocyanate composition with the pre-mixed composition obtained in step i) to form a reactive foam formulation is performed using a 2-component mixing system. According to embodiments, the mixing system is a pressure mixing system. According to embodiments, the pressure mixing system is a high pressure mixing system that uses impingement to mix materials.

According to embodiments, the step of mixing of the polyisocyanate composition with the pre-mixed composition obtained in step i) to form a reactive foam formulation is performed using a 2-component dynamic mixing system.

According to embodiments, the step of mixing of the polyisocyanate composition with the pre-mixed composition obtained in step i) to form a reactive foam formulation is performed using a combination of impingement and dynamic mixing.

According to embodiments, no external heat is preferably added to the reactive foam formulation, the reaction exotherm is sufficient to obtain a foamed structure.

According to embodiments, the step of allowing the reactive foam formulation obtained in step ii) to foam is performed in a mould and the mould temperature may be altered to affect skin properties. Elevated mould temperature may also prevent excessive heat loss, hereby helping conversion/molecular weight build-up during polymerisation.

According to embodiments, the method for making the elastomeric PU/PUR foam according to the invention is performed at an isocyanate index in the range 75 up to 125, in the range 80 up to 120, in the range 85 up to 120, in the range 88 up to 120, in the range 90 up to 120, in the range 90 up to 110, in the range 92 up to 110, in the range 95 up to 110, in the range 95 up to 105, in the range 98 up to 105, in the range 98 up to 102.

According to embodiments, the number of urea forming equivalents of water C is smaller than 0.08, smaller than 0.07, smaller than 0.06, smaller than 0.055, smaller than 0.05, smaller than 0.045, smaller than 0.04, in the range 0.02 up to 0.04 calculated on 100 gram reactive foam formulation.

According to embodiments, the number of equivalents low MW urethane forming compounds D is smaller or equal than 0.07 and wherein the number of equivalents low MW urethane forming compounds D is greater than 0, greater than 0.005, greater than 0.008, greater than 0.01, greater than 0.012, greater than 0.015, greater than 0.017, greater than 0.02 or greater than 0.025 calculated on 100 gram reactive foam formulation.

According to embodiments, the number of equivalents low MW urethane forming compounds D is smaller than 0.06, smaller than 0.055, smaller than 0.05, smaller than 0.045, smaller than 0.04 or smaller than 0.035 calculated on 100 gram reactive foam formulation.

According to embodiments, the number of urea forming equivalents of low molecular weight (MW) urea forming compounds containing amine functional groups E is greater than 0 calculated on 100 gram reactive foam formulation (not optional). The amount of low MW urea forming compounds might be at least 5%, 10%, 15%, 20%, 25%, or 30% by weight calculated on the total amount of low MW urea forming compounds and low MW urethane forming compounds in the reactive formulation. Increasing the amount of low MW urea forming compounds in the reactive formulation might be beneficial to lower the free rise density of the foam.

According to embodiments, the ratio $\dfrac{D+E}{C}$ in the reactive foam formulation is smaller than 1.4, smaller than 1.3, smaller than 1.2, smaller than 1.1, smaller than 1 or smaller than 0.9.

According to embodiments, the ratio $\dfrac{D+E}{C}$ in the reactive foam formulation is larger than 0, greater than 0.05, greater than 0.1, greater than 0.13.

According to embodiments, the blowing agent composition comprises at least 20 wt%, preferably > 40 wt%, more preferably > 60 wt%, more preferably > 80 wt%, more preferably > 90 wt% water based on the total weight of all blowing agents used.

In preferred embodiments, physical blowing agents may be added to the reactive foam formulation used to make the elastomeric PU/PUR foam according to the invention. Addition of physical blowing agents may help to further reduce the density of the foam formulation while maintaining an optimal ratio $\frac{D+E}{C}$.

According to embodiments, suitable physical blowing agents may be selected from isobutene, methylformate, dimethyl ether, methylene chloride, acetone, t-butanol, argon, krypton, xenon, chloro fluoro carbons (CFCs), hydro fluoro carbons (HFCs), hydro chloro fluoro carbons (HCFCs), hydro fluoro olefins (HFO's), Hydro Chloro Fluoro Olefins (HCFO's), and hydrocarbons such as pentane, isopentane and cyclopentane and mixtures thereof. According to preferred embodiments, the physical blowing agents are selected from at least $CO_2$ and/or $N_2$.

According to preferred embodiments, the physical blowing agents may be selected from HFO blowing agents and/or HCFO blowing agents and/or hydrocarbons such as cyclopentane. HFO blowing agents may be selected from 3,3,3-trifluoropropene, 1,2,3,3,3 - pentafluoropropene, cis- and/or trans-1,3,3,3-tetrafluoropropene and/or 2,3,3,3-tetrafluoropropene, and/or 1,1,1,4,4,4-hexafluorobut-2-ene, and/or 1-chloro-3,3,3-trifluoropropene, and/or 2-chloro-3,3,3-trifluoropropene and mixtures thereof. Preferred examples of commercially available suitable HFO blowing gases are Honeywell HFO-1234ze (Honeywell's trade name for trans - 1,3,3,3-tetrafluoropropene) or Opteon® 1100 (Chemours' trade name for cis-1,1,1,4,4,4-hexafluorobut-2-ene, $CF_3CH=CHCF_3$). A preferred example of a commercially available suitable HCFO blowing gas is Honeywell Solstice® 1233zd (Honeywell's trade name for trans-1-chloro-3,3,3-trifluor-opropene, $CHCl=CHCF_3$) or Forane® 1233zd (Arkema's trade name for trans-1-chloro-3,3,3-trifluoropropene, $CHCl=CHCF_3$).

According to embodiments, the amount of blowing agents used in the reactive foam formulation can vary based on, for example, the intended use and application of the foam product and the desired foam stiffness and density.

According to embodiments, the amount of water and optionally further blowing agents used in the reactive foam formulation is in the range 0.1 to 25 parts by weight, more preferably from 0.25 to 15 pbw per hundred weight parts isocyanate reactive compounds (polyol) in order to produce a low density flexible foam having a density < 500 kg/m³, e.g. a low density foam having densities in the range 50-500 kg/m³.

According to embodiments, the isocyanate composition used to make the PU/PUR foam according to the invention has a molecular number average isocyanate functionality in the range 1.8 up to 2.4, in the range of 1.8 up to 2.2, more preferably in the range of 1.9-2.1, more preferably in the range of 1.95-2.05, more preferably in the range of 1.95-2.02, more preferably in the range of 1.95-2.015, more preferably in the range of 1.95-2.012, even more preferably in the range of 1.98-2.01 and most preferably in the range of 1.98-2.005.

According to embodiments, the isocyanate composition has an NCO value in the range 3 up to 50, an NCO value in the range 5 up to 33.56, an NCO value in the range 8 up to 30, an NCO value in the range 10 up to 26 or an NCO value in the range 13 up to 23.

According to embodiments, the isocyanate composition used to make the elastomeric PU/PUR foam according to the invention comprises at least 80 % by weight, at least 85 % by weight, at least 90 %, at least 95 % by weight difunctional isocyanate compounds calculated on the total weight of all isocyanate compounds in the isocyanate composition. Most preferably the isocyanate composition contains at least 80 wt%, at least 85 wt%, at least 90 wt%, at least 95 wt%, and most preferably at least 98 wt% 4,4'- diphenylmethane diisocyanates calculated on the total weight of the isocyanate composition.

According to embodiments, the difunctional isocyanates (diisocyanates) may be selected from aliphatic diisocyanates selected from hexamethylene diisocyanate, isophorone diisocyanate, methylene dicyclohexyl diisocyanate and cyclohexane diisocyanate and or from aromatic diisocyanates selected from toluene diisocyanate (TDI), naphthalene diisocyanate, tetramethylxylene diisocyanate, phenylene diisocyanate, toluidine diisocyanate and, in particular, diphenylmethane diisocyanate (MDI).

According to embodiments, the isocyanate composition used in the process of the present invention contains essentially (at least 95 % by weight, more preferably at least 98 % by weight calculated on the total weight of the polyisocyanate composition) pure 4,4'-diphenylmethane diisocyanate.

According to embodiments, the isocyanate composition used in the process of the present invention contains mixtures of 4,4'-diphenylmethane diisocyanate with one or more other organic diisocyanates, especially other diphenylmethane diisocyanates, for example the 2,4'-isomer optionally in conjunction with the 2,2'-isomer.

According to embodiments, the isocyanate compounds in the polyisocyanate composition may also be an MDI variant derived from a isocyanate composition containing at least 95 wt% 4,4'-diphenylmethane diisocyanate. MDI variants are well known in the art and, for use in accordance with the invention, particularly include liquid products obtained by introducing carbodiimide groups into said polyisocyanate composition and/or by reacting with one or more polyols.

According to embodiments, the isocyanate compounds in the isocyanate composition may also be isocyanate-terminated prepolymer which is prepared by reaction of an excessive amount of the isocyanate having at least 80 wt%, at least 85 wt%, at least 90 wt%, at least 95% of 4,4'-diphenylmethane diisocyanate with a suitable difunctional polyol in order to obtain a prepolymer having the indicated NCO value. Methods to prepare prepolymers have been described in the art. The relative amounts of isocyanate and polyol depend on their equivalent weights and on the desired NCO value and can be determined easily by those skilled in the art. The NCO value of the isocyanate-terminated prepolymer is preferably above 3%, preferably above 5%, more preferably above 8% and most preferably above 10%.

According to embodiments, the molecular number average functionality of the total of the high MW isocyanate reactive compounds in the reactive formulation into account is in the range 1.8 up to 2.4, in the range of 1.8 up to 2.2, more preferably in the range of 1.9-2.1, more preferably in the range of 1.95-2.05, more preferably in the range of 1.95-2.02, more preferably in the range of 1.95-2.015, more preferably in the range of 1.95-2.012, even more preferably in the range of 1.98-2.01 and most preferably in the range of 1.98-2.005.

According to embodiments, the molecular number average functionality of the blend of all isocyanate reactive compounds is in the range of 1.8 up to 2.4, in the range of 1.8 up to 2.2, more preferably in the range of 1.9-2.1, more preferably in the range of 1.95-2.05, more preferably in the range of 1.95-2.02, more preferably in the range of 1.95-2.015, more preferably in the range of 1.95-2.012, even more preferably in the range of 1.98-2.01 and most preferably in the range of 1.98-2.005.

According to embodiments, the molecular number average functionality of the blend of all reactive components, including all isocyanate and isocyanate reactive compounds, is in the range of 1.8 up to 2.4, in the range of 1.8 up to 2.2, more preferably in the range of 1.9-2.1, more preferably in the range of 1.95-2.05, more preferably in the range of 1.95-2.02, more preferably in the range of 1.95-2.015, more preferably in the range of 1.95-2.012, even more preferably in the range of 1.98-2.01 and most preferably in the range of 1.98-2.005.

According to embodiments, the isocyanate reactive compounds in the reactive foam formulation comprising the high MW isocyanate reactive compounds, the low MW urethane forming compounds and low MW urea forming compounds are selected from at least 75 % by weight difunctional polyols, more preferably at least 85 % by weight difunctional polyols, most preferably at least 90 % by weight difunctional polyols calculated on the total weight of all isocyanate reactive compounds in the reactive mixture.

According to embodiments, the isocyanate reactive compounds in the reactive foam formulation comprising the high MW isocyanate reactive compounds, the low MW urethane forming compounds and low MW urea forming compounds are selected from at least 90 % by weight difunctional polyols, more preferably at least 95 % by weight difunctional polyols, most preferably at least 98 % by weight difunctional polyols calculated on the total weight of all isocyanate reactive compounds in the reactive foam formulation.

According to embodiments, the high MW isocyanate reactive compounds having a molecular weight > 500 g/mol are selected from polyether based polyols wherein the polyether backbone is at least 50 w% based on a butyleneoxide polyol, preferably at least 70 w% based on a butyleneoxide polyol, more preferably at least 80 w% based on a butyleneoxide polyol and most preferably at least 90 w% based on a butyleneoxide polyol.

According to embodiments, the high MW isocyanate reactive compounds having a molecular weight > 500 g/mol are selected from polyester diols, polyether polyols and/or polyester polyether polyols having a molecular weight in the range 500 g/mol up to 10000 g/mol, preferably in the range 500 g/mol up to 5000 g/mol, more preferably in the range 650 g/mol up to 4000 g/mol.

According to embodiments, the high MW polyols having a molecular weight > 500 g/mol are selected from at least one linear high molecular weight difunctional polyol having a molecular weight in the range 500-20000 g/mol and the amount of linear high molecular weight difunctional polyol is at least 80 wt%, more preferably at least 85 wt%, most preferably at least 90 wt% calculated on the total weight of the high MW polyols. Preferably said difunctional polyols are selected from linear polyester polyols, polyether polyols, and/or polyether-polyester polyols (including speciality polyester diols such as polycaprolactone diols).

According to embodiments, the high MW (difunctional) polyol may comprise and/or may be selected from a silica based diol such as dihydroxyl-terminated polydimethylsiloxane (PDMS-diol), a dihydroxyl terminated polybutadiene (HTPB-diol), fatty acids dimer-based polyester diols and mixtures thereof.

According to embodiments, the elastomeric PU/PUR foam according to the invention may be fabricated using mainly high molecular weight difunctional polyol(s) selected from polyester diols. These elastomeric PU/PUR foam will have excellent compatibility with PVC and other polar plastics.

According to embodiments, the elastomeric PU/PUR foam according to the invention may be fabricated using mainly high molecular weight difunctional polyol(s) selected from polyether diols. These elastomeric PU/PUR foams will have excellent low temperature flexibility and hydrolysis resistance, making them suitable for applications where water is a consideration.

According to embodiments, the low MW urethane forming compounds have a molecular weight < 500 g/mol, preferably a molecular weight in the range 45 g/mol up to 500 g/mol, more preferably in the range 50 g/mol up to 250 g/mol and are selected from 1,6-hexanediol, 1,4-butanediol, monoethylene glycol, diethylene glycol, triethyleneglycol, tetraethyleneglycol, propylene glycol, dipropylene glycol, tripropylene glycol, 1,3-propanediol, 1,-3-butanediol, 1,5-pentanediol, Polycaprolactone diol, 2-methyl-1,3-propanediol, neopentyl glycol, 1,4-cyclohexanedimethanol, hydroquinone bis (2-hydroxyethyl) ether (HQEE), 1,3-Bis (2-hydroxyethyl) resorcinol (HER), ethanolamine, methyldiethanolamine and/or phenyldiethanolamine. Preferably the low MW urethane forming compounds are selected from 1,6 hexanediol, 1,4-butanediol or ethylene glycol. 1,4-Butanediol is most preferred.

According to embodiments, the low MW urethane forming compounds or the low MW urea forming compounds have a molecular weight in the range 45 g/mol up to 500 g/mol, more preferably in the range 100 g/mol up to 500 g/mol, more preferably in the range 200 g/mol up to 500 g/mol, more preferably in the range 300 g/mol up to 500 g/mol, more preferably in the range 350 g/mol up to 500 g/mol, most preferably in the range 350 g/mol up to 450 g/mol.

According to embodiments, the low MW urethane forming compounds are selected from at least 90 wt % of 1 type of compound which is beneficial for the phase separation. Preferably said low MW urethane forming compounds are selected from 1,6-hexanediol, 1,4-butanediol or ethylene glycol, most preferably 1,4-butanediol.

According to embodiments, the hardblock content of the reactive foam formulation is in the range 12 up to 65 %, preferably in the range 12 % up to 50 %, more preferably in the range 12 % up to 40 %, more preferably in the range 14 % up to 35 %, more preferably in the range 14 % up to 30 %, more preferably in the range 14 % up to 27 %, more preferably in the range 15 % up to 25 %, most preferably in the range 17 % up to 22 %.

According to embodiments, the water, low MW urea forming compounds (and possibly the low MW urethane forming compounds) will form urea hardblock units after reaction in the obtained foam and wherein at least 5% of the theoretical equivalents in said urea hardblock originate from water, more preferably 10%, 20%, 30%, 40%, 50%, 60%, 70%, 75% of the theoretical equivalents in said urea hardblock originate from water.

According to embodiments, the reactive foam formulation may further comprise solid polymer particles such as styrene-based polymer particles. Examples of styrene polymer particles include so-called "SAN" particles of styrene-acrylonitrile. Alternatively, small amounts of polymer polyols may be added as an additional polyol in the isocyanate reactive composition. An example of a commercially available polymer polyol is HYPERLITE® Polyol 1639 which is a Polyether polyol modified with a styrene-acrylonitrile polymer (SAN) with a solid content of approximately 41 wt% (also referred to as polymer polyol).

According to embodiments, the reactive foam formulation may comprise fillers such as wood chips, wood dust, wood flakes, wooden plates; paper and cardboard, both shredded or layered; sand, vermiculite, clay, cement and other silicates; ground rubber, ground thermoplastics, ground thermoset materials; honeycombs of any material, like cardboard, aluminium, wood and plastics; metal particles and plates; cork in particulate form or in layers; natural fibers, like flax, hemp and sisal fibers; synthetic fibers, like polyamide, polyolefin, polyaramide, polyester and carbon fibers; mineral fibers, like glass fibers and rock wool fibers; mineral fillers like $BaSO_4$ and $CaCO_3$; nanoparticles, like clays, inorganic oxides and carbons; glass beads, ground glass, hollow glass beads; expanded or expandable beads; untreated or treated waste, like milled, chopped, crushed or ground waste and in particular fly ash; woven and non-woven textiles; and combinations of two or more of these materials.

According to embodiments, other conventional ingredients (additives and/or auxiliaries) may be used in making the elastomeric PU/PUR foam according to the invention. These include surfactants, flame proofing agents, fillers, pigments, stabilizers and the like.

According to embodiments, the surfactant used is preferably selected from a silicon surfactant. Examples of suitable commercially available surfactants are Tegostab® B8494, Tegostab® B8905, Tegostab® B8993, Tegostab® B8948, Tegostab® B8017, Tegostab® B8930, Tegostab® B8950, Tegostab® B8960, Vorasurf® DC193, Vorasurf® 5382, Niax® L1500, Niax® L1550, Niax® L1542, Niax® UAX 7061, Niax® UAX 6897, Niax® UAX 6639, Niax® UAX 7061, Tegostab® B8466 and Tegostab® B8416.

According to embodiments, suitable catalysts accelerate in particular the reaction between the NCO groups of the diisocyanates a) and accelerate the hydroxyl groups of the isoreactive compounds and are selected from those known in the prior art such as metal salt catalysts, such as organotins, and amine compounds, such as triethylenediamine (TEDA), N-methylimidazole, 1,2-dimethylimidazole, N-methylmorpholine, N-ethylmorpholine, triethylamine, N,N'-dimethylpiperazine, 1,3,5-tris(dimethylaminopropyl) hexahydrotriazine, 2,4,6-tris(dimethylaminomethyl)phenol, N-methyldicyclohexylamine, pentamethyldipropylene triamine, N-methyl-N'-(2-dimethylamino)-ethyl-piperazine, tributylamine, pentamethyldiethylenetriamine, hexamethyltriethylenetetramine, heptamethyltetraethylenepentamine, dimethylaminocyclohexylamine, pentamethyldipropylene triamine, triethanolamine, dimethylethanolamine, bis(dimethylaminoethyl) ether, tris(3-dimethylamino)propylamine, or its acid blocked derivatives, and the like, as well as any mixture thereof. The catalyst compound should be present in the reactive composition in a catalytically effective amount, generally from about 0 to 5 % by weight, preferably 0 to 2 -% by weight, most preferably 0 to 1 -% by weight, based on total weight of all reactive ingredients used.

All reactants in the reactive foam formulation can be reacted at once or can be reacted in a sequential manner. By prior mixing, all or part of the isocyanate-reactive compounds solutions or suspensions or dispersions are obtained. The various components used in the manufacture of the compositions of the invention can in fact be added in any order. The process can be selected from a bulk process, either batch or continuous process including cast process.

The elastomeric foam according to the invention further exhibits thermoplastic, more in particular thermoplastic deformable properties.

The invention further provides a process for recycling and/or remelting the elastomeric foam according to the invention having thermoplastic behaviour. Said process will recycle/remelt the thermoplastic elastomeric foam according to the invention into non-foamed thermoplastic materials without significantly deteriorating the thermoplastic polymer matrix compared to state of the art recycled and/or remelted thermoplastic polyurethane (TPU) materials.

According to embodiments, the remelting / recycling of the thermoplastic elastomeric foam according to the invention is performed by a heat and/or compression process at temperatures above the melting temperature of the thermoplastic material of the elastomeric foam.

According to embodiments, the remelting / recycling of the thermoplastic elastomeric foam according to the invention is performed in an extruder at temperatures above the melting temperature of the thermoplastic material. By further addition of a blowing agent in the extruder a foamed recycled TPU foam might be achieved with closed cells.

The invention further discloses a thermally reformed material based on the foam according to the invention. The density of the thermally reformed material is at least > 1.5 times the original density of the foam, more preferably > 2 times the original density of the foam, more preferably > 3 times the original density of the foam, most preferably > 4 times the original density of the foam.

In some cases, it is preferred to use the thermally reformed/recycled foam material in an identical application field as the original foam application. An example is the use of the thermoplastic PU/PUR foam according to the invention as a shoe sole cushioning material (footwear midsole) and wherein the thermally reformed/recycled foam material is used as a footwear outsole material.

The invention is illustrated with the following examples.

EXAMPLES

Chemicals used:

| | | |
|---|---|---|
| Polymeg® 2000 | Polytetramethylene ether glycol (PTMEG) produced by polymerizing tetrahydrofuran from LyondellBasell, having an OH number of 56 mg KOH/g | |
| Bayflex® E2003 | Polyester polyol, OH number of 56 mg KOH/g, functionality 2 can be obtained from Bayer Material Science company limited | |
| Polycarbonate polyol | Polyol, OH value of 48 mg KOH/g, functionality of 2.0 and number average Mw of 2000g/mol as produced in US2012/0095122A1 | |
| BDO | Chain extender, 1,4-butanediol | |
| MEG | Chain extender, Monoethylene glycol | |
| TMP | Crosslinker, Trimethylolpropane | |
| Water | Blowing agent, Distilled water | |
| Dabco® Solid | Catalyst, Dabco crystalline, 100% solid triethylene diamine (TEDA) from Evonik | |
| Bicat Z | Catalyst, Zinc Neodecanoate from Everchem Specialty Chemicals | |
| Tegostab® B 8993 | polyether-polydimethyl siloxane copolymer surfactant from Evonik | |
| VORASURF® DC 193 | General-purpose silicone surfactant from DOW | |
| Isocyanate 1 | 4,4'-MDI available as Suprasec® MPR from Huntsman | |
| Isocyanate 2 | Isocyanate prepolymer based on Isocyanate 1 with Polymeg® 2000 and an NCO content of 16% | |
| Isocyanate 3 | Isocyanate prepolymer as described in US2012/0095122A1 based on Isocyanate 1 reacted with Bayflex® E2003 and a polycarbonate polyol and backblended with carbodiimidized MDI to obtain an NCO content of 19.5% | |
| CD-MDI | Carbodiimidized-MDI as described in US2012/0095122A1 | |

Preparation of the isocyanate-terminated prepolymers

Isocyanate 2 is prepared by loading 53.5 w% isocyanate 1 to a reactor at 60°C, adding 0.001 w% thionylchloride and stirring the mixture. The reactor contains a rotating mixing blade, thermometer and is continuously flushed by nitrogen using an in- and out-let. Then 46.499w% of Polymeg® 2000 at 60°C is added in 30 minutes while stirring. After the addition of all components (100 w%) the mixture was heated to a temperature of 80°C for 2 hours while continuously stirring. The reaction mixture was then cooled to room temperature and the NCO value of 16% was determined the next day.

Isocyanate 3 preparation can be found in US2012/0095122A1 and is incorporated herein as reference. It is prepared by loading 60 w% isocyanate 1 to a reactor together with 1.7w% of a 2000g/mol polycarbonate polyol and 32.3 w% Bayflex® 2003E. The reactor contains a rotating mixing blade, thermometer and is continuously flushed by nitrogen using an in- and out-let. The material is stirred at 70°C and allowed to react for 2 hours before being cooled to 65°C. Thereafter 6 w% carbodiimized MDI is charged to the reactor which is mixed for 30 minutes at 65°C to obtain the full mixture (100 w%). The reaction mixture was then cooled to room temperature and the NCO value of 19.5% was determined the next day.

Test methods

Test methods used for Comparative example 1D can be found in US2012/0095122A1 and are incorporated herein as reference.

All other examples (1A-1C) were tested/prepared using the methods described below:

The materials are made according to practical knowledge of those skilled in the art. This is done by varying the mixing ratio of the polyol blend and isocyanate blend and determining which mixing ratio provides the strongest foam after a given time (in our case 70 seconds) using an indentation drop test. The practical optimum was then used to make samples 1A, 1B and 1C and the theoretical isocyanate index was calculated on the used mixing ratio.

As can be seen the practical optimum is very close to a theoretical isocyanate index of 100 which is important to obtain good elastomeric properties. The cream time and end of rise time was monitored as the time where the mixture starts to foam and the time the foam reaches its highest point respectively. Both free rise density and moulded density are determined as described in the definitions section.

The overpack factor (or ratio) is calculated by the ratio of the "moulded density" over the "free rise density" and is >1.0. To ensure the examples have a similar moulded density, even though they have a different free rise density, we varied the overpack ratio. To take into account any possible density variations in the examples, the tensile strength (measured according to DIN 53504) over apparent density ratio was calculated. The definition section includes the method of calculating the "urea forming equivalents" and "urethane forming equivalents" denoted by C, D and E; but also covers the other tested parameters shown in table 1 and the methods used.

Examples 1A (according to the invention) and Example 1B and 1C (comparative)

The formulation of the examples is split in 2 separate blends, called the "isocyanate blend" and the "isocyanate reactive blend". The isocyanate reactive blend (as shown in the examples) refers to all other ingredients besides the isocyanate and thus contains polyols, crosslinkers, chain extenders, catalysts and surfactants (but could also contain other ingredients as described in certain embodiments).

The foam samples (free rise & moulded) are made using a 2K PU casting Green machine with a DVM2408 mixing head. The "isocyanate blend" and "isocyanate reactive blend" were kept at 40±1°C and 53±1°C respectively by the machine before the casting was done. Example 1A is according to the invention while example 1B and 1C are comparative examples.

Example 1D Comparative

The composition and data of comparative example 1D are taken from reference US2012/0095122A1 where it can be found as example 6 in Table 2.

Table 1: Examples

| Material | Formulation (parts by weight) | | | |
|---|---|---|---|---|
| | **1A** | **1B** | **1C** | **1D** |
| Polymeg® 2000 | 95.7 | 95.7 | 88.7 | |
| Bayflex® E2003 | | | | 91 |
| TMP | 0.2 | 0.2 | 0.2 | |
| Bicat Z | 0.1 | 0.1 | 0.1 | |
| Water | 0.9 | 0.9 | 0.9 | 0.4 |

(continued)

| Material | | Formulation (parts by weight) | | | |
|---|---|---|---|---|---|
| | | **1A** | **1B** | **1C** | **1D** |
| Tegostab® B 8993 | | 1 | 1 | 1 | |
| BDO | | 1.69 | 3.37 | 9.00 | |
| Dabco® Solid | | 0.5 | 0.5 | 0.5 | 0.495 |
| MEG | | | | | 7.69 |
| DC193 | | | | | 0.4 |
| Isocyanate 2 | | 57.33 | 63.83 | 92.48 | |
| Isocyanate 3 | | | | | 79.33836 |
| sum pbw system | | 157.42 | 165.60 | 192.88 | 180.82 |
| Material. The bracket section after the material shows the urethane/urea forming equivalent weight and if it contributes to A, B, C, D or E (see definitions section) | | Urethane and urea forming equivalents on 100gr reactive foam formulation for each of the used materials. | | | |
| Polymeg® 2000 (1000 g/eq, B) | | 0.0608 | 0.0578 | 0.0460 | |
| Bayflex® E2003 (1000 g/eq, B) | | | | | 0.0503 |
| TMP (44.7 g/eq, D) | | 0.0028 | 0.0027 | 0.0023 | |
| Water (18 g/eq, C) | | 0.0318 | 0.0302 | 0.0259 | 0.0123 |
| BDO (45 g/eq, D) | | 0.0238 | 0.0453 | 0.1036 | |
| MEG (31 g/eq, D) | | | | | 0.1370 |
| DC193 (748 g/eq, B) | | | | | 0.0003 |
| | | Urethane and urea forming equivalents on 100gr reactive foam formulation | | | |
| C | | 0.0318 | 0.0302 | 0.0259 | 0.0123 |
| D | | 0.0266 | 0.0480 | 0.1059 | 0.1370 |
| E | | 0.0 | 0.0 | 0.0 | 0.0 |
| isocyanate index | | 92 | 90 | 90 | 94 |
| cream time | s | 5 | 5 | 5 | / |
| end of rise | s | 22 | 22 | 21 | / |
| Free rise density | kg/m$^3$ | 204 | 188 | 158 | / |
| Moulded density | kg/m$^3$ | 364 | 367 | 337 | 550 |
| overpack factor | | 1.78 | 1.95 | 2.13 | / |
| Hardness | Asker C | 50-52 | 47-49 | 53-55 | 66 |
| Angle tear | N/mm | 11.43 | 10.91 | 10.99 | / |
| Tensile Strength | MPa | 4.23 | 3.61 | 2.81 | 4.30 |
| Elongation | % | 572 | 568 | 419 | 431 |
| D/C = (D+E)/C | | 0.839 | 1.588 | 4.087 | 11.146 |
| Calculated Tensile strength / Density (*) | kPa/m$^3$ | 11.64 | 9.84 | 8.34 | 7.82 |
| Resilience ball | % | 63.2 | 59.6 | 58.7 | / |
| (*) Apparent density = moulded density | | | | | |

The experimental data shown in table 1 clearly show the improved tensile strength and ball resilience of the foam according to the invention. This is clearly visible by the calculated tensile strength (measured according to DIN 53504) over apparent density ratio. The invention thereby allows to make significantly stronger foams at a given density, or a lower density foam with a similar tensile strength. The data also clearly shows that example 1A, having an optimal D/C ratio (or (D+E)/C ratio) allows to make the strongest foam with the highest resilience.

The recyclability of the foam from example 1A was also tested and it was very well recyclable via compression moulding using a Fontijne Lab-press TP400 at a temperature of 180°C for 2 x 5 minutes using a pressure of 20 kN.

EMBODIMENTS

1. An elastomeric polyurethane-polyurea comprising water blown foam having an apparent density in the range 30-700 kg/m$^3$ measured according to ISO 845 and having a tensile strength (measured according to DIN 53504) over apparent density ratio of at least 10 kPa.m$^3$/kg and wherein the foam has

- Optionally urethane hard-block species formed from D equivalents urethane forming isocyanate reactive species having hydroxyl functional groups and a molecular weight < 500 g/mol, and
- Optionally urea hard-block species formed from E equivalents urea forming isocyanate reactive species having amine functional groups and a molecular weight < 500 g/mol, and
- Urea hard-block species formed from C urea forming equivalents of water

such that the total number of urethane and urea hard-block species formed from D equivalents urethane forming isocyanate reactive species and E equivalents urea forming isocyanate reactive species over the total number urea of hard-block species from formed from C equivalents water is smaller than 1.4 and calculated as $\frac{D+E}{C}$

2. The foam according to embodiment 1 having a tensile strength (measured according to DIN 53504) over apparent density (ISO 845) ratio of at least 10.5 kPa.m$^3$/kg, at least 11 kPa.m$^3$/kg, at least 11.5 kPa.m$^3$/kg, at least 12 kPa.m$^3$/kg, at least 12.5 kPa.m$^3$/kg, at least 13 kPa.m$^3$/kg, at least 13.5 kPa.m$^3$/kg, at least 14 kPa.m$^3$/kg.

3. The foam according to any of foregoing embodiments wherein the total number of urethane and urea hard-block species formed from D equivalents urethane forming isocyanate reactive species and E equivalents urea forming isocyanate reactive species is greater than 0.

4. The foam according to any of foregoing embodiments wherein the apparent density is in the range in the range 30-600 kg/m$^3$ or in the range 30-500 kg/m$^3$ measured according to ISO 845.

5. The foam according to any of foregoing embodiments wherein the apparent density is in the range in the range 85-700 kg/m$^3$, in the range 100-600 kg/m$^3$, in the range 120-500 kg/m$^3$, in the range 130-500 kg/m$^3$,in the range 140-500 kg/m$^3$, in the range 150-500 kg/m$^3$ measured according to ISO 845.

6. The foam according to any of foregoing embodiments 1-4 wherein the foam has urethane and urea hard-block species formed from D equivalents urethane forming isocyanate reactive species having a molecular weight < 500 g/mol, E equivalents urea forming isocyanate reactive species having a molecular weight < 500 g/mol not being water and C equivalents urea hard-block species selected from water (C) and wherein the ratio calculated as $\frac{D+E}{C}$ is smaller than 1.2, smaller than 1.1, smaller than 1, smaller than 0.9.

7. The foam according to any of foregoing embodiments 1-4 wherein the foam has urethane and urea hard-block species formed from D equivalents urethane forming isocyanate reactive species having a molecular weight < 500 g/mol, E equivalents urea forming isocyanate reactive species having a molecular weight < 500 g/mol not being water and C equivalents urea hard-block species selected from water (C) and wherein the ratio calculated as $\frac{D+E}{C}$ is larger than 0, larger than 0.05, larger than 0.1, larger than 0.13.

8. The foam according to any of foregoing embodiments 1-4 wherein the foam has urethane and urea hard-block species formed from D equivalents urethane forming isocyanate reactive species having a molecular weight < 500 g/mol, E equivalents urea forming isocyanate reactive species having a molecular weight < 500 g/mol not being water and C equivalents urea hard-block species selected from water (C) and wherein the ratio calculated as $\frac{D+E}{C}$ is in the range 0.55 up to 1.2 in the range 0.6 up to 1.1, in the range 0.65 up to 1.0, in the range 0.7 up to 0.9.

9. The foam according to any of foregoing embodiments wherein the foam is a sprayed foam, a moulded foam, an injection moulded foam, a free risen foam, a free risen slabstock foam or sprayed foam.

10. The foam according to any of foregoing embodiments wherein the foam has thermoplastic properties.

11. Use of the foam according to any of foregoing embodiments in shoe soles, shoe midsoles, orthopedic products, as artificial leather, as mattress, as foam seals and gaskets, as elastomeric wheels and tires, as automotive seating, in upholstery applications, as floor covering, as bicycle saddles, as lightweight synthetic fibers, as sports clothing and apparel, as grips and handles and as microcellular foam applications.

12. A process for recycling and/or remelting the thermoplastic foam according to embodiment 10 into non-foamed thermoplastic materials by a heat and/or compression process at temperatures above the melting temperature of the thermoplastic material of the elastomeric foam.

13. A process for recycling and/or remelting the thermoplastic foam according to embodiment 10 in an extruder at temperatures above the melting temperature of the thermoplastic material.

14. A process for recycling and/or remelting the elastomeric foam according to embodiment 13 in an extruder at temperatures above the melting temperature of the thermoplastic material and in the presence of a blowing agent to form a foamed recycled thermoplastic foam.

15. A thermally recycled foam obtained by any of foregoing embodiments 12-14 having at least 1.5 times the original density of the foam, more preferably 2 times the original density of the foam, more preferably 3 times the original density of the foam, most preferably 4 times the original density of the thermoplastic elastomeric foam according to any of foregoing embodiments 1-10.

## Claims

1. An elastomeric polyurethane-polyurea comprising water blown foam having an apparent density in the range 30-700 kg/m$^3$ measured according to ISO 845 and having a tensile strength measured according to DIN 53504 over apparent density ratio of at least 10 kPa.m$^3$/kg, wherein the foam has

   - optionally urethane hard-block species formed from D equivalents urethane forming isocyanate reactive species having hydroxyl functional groups and a molecular weight < 500 g/mol, and
   - optionally urea hard-block species formed from E equivalents urea forming isocyanate reactive species having amine functional groups and a molecular weight < 500 g/mol, and
   - urea hard-block species formed from C urea forming equivalents of water,

   such that the total number of urethane and urea hard-block species formed from D equivalents urethane forming isocyanate reactive species and E equivalents urea forming isocyanate reactive species over the total number urea of hard-block species from formed from C equivalents water is smaller than 1.1 and calculated as $\frac{D+E}{C}$, wherein the elastomeric polyurethane-polyurea comprising water blown foam is produced from a reactive foam formulation comprising:

   - an isocyanate composition comprising A equivalents isocyanate compounds, said isocyanate composition having an NCO value in the range 3 up to 50 and a number average isocyanate functionality in the range of 1.8 up to 2.5,
   - B equivalents isocyanate reactive compounds having a molecular weight > 500 g/mol and a functionality in the range 1.8 up to 2.5,
   - C urea forming equivalents of water,
   - optionally D urethane forming equivalents of low molecular weight (MW) urethane forming isocyanate reactive compounds containing hydroxyl functional groups and having a molecular weight < 500 g/mol and having a hydroxy functionality in the range 1 up to 8,

- optionally E urea forming equivalents of low molecular weight (MW) urea forming isocyanate reactive compounds containing amine functional groups and having a molecular weight < 500 g/mol and having a functionality in the range 1 up to 8, and
- at least one catalyst compound,

wherein

- C is in the range of 0.02 up to 0.08 calculated on 100 gram reactive foam formulation,
- optionally D is in the range of 0 up to 0.07 calculated on 100 gram reactive foam formulation,
- optionally D + E is greater than 0, $\dfrac{D+E}{C}$ is smaller than 1.1, and
- the isocyanate index is in the range 75 up to 125, wherein the urea forming equivalents and urethane forming equivalents are calculated as defined in the specification.

2. The foam according to claim 1, wherein the foam has a tensile strength measured according to DIN 53504 over apparent density (ISO 845) ratio of at least 10.5 kPa.m$^3$/kg, at least 11 kPa.m$^3$/kg, at least 11.5 kPa.m$^3$/kg, at least 12 kPa.m$^3$/kg, at least 12.5 kPa.m$^3$/kg, at least 13 kPa.m$^3$/kg, at least 13.5 kPa.m$^3$/kg, or at least 14 kPa.m$^3$/kg.

3. The foam according to any of foregoing claims, wherein the total number of urethane and urea hard-block species formed from D equivalents urethane forming isocyanate reactive species and E equivalents urea forming isocyanate reactive species is greater than 0.

4. The foam according to any of foregoing claims, wherein the apparent density is in the range 150-600 kg/m$^3$ or in the range 150-500 kg/m$^3$ measured according to ISO 845.

5. The foam according to any of foregoing claims 1-4, wherein the foam has urethane and urea hard-block species formed from D equivalents urethane forming isocyanate reactive species having a molecular weight < 500 g/mol, E equivalents urea forming isocyanate reactive species having a molecular weight < 500 g/mol not being water and C equivalents urea hard-block species selected from water (C) and wherein the ratio calculated as $\dfrac{D+E}{C}$ is smaller than 1, or smaller than 0.9.

6. The foam according to any of foregoing claims 1-4, wherein the foam has urethane and urea hard-block species formed from D equivalents urethane forming isocyanate reactive species having a molecular weight < 500 g/mol, E equivalents urea forming isocyanate reactive species having a molecular weight < 500 g/mol not being water and C equivalents urea hard-block species selected from water (C) and wherein the ratio calculated as $\dfrac{D+E}{C}$ is larger than 0, larger than 0.05, larger than 0.1, or larger than 0.13.

7. The foam according to any of foregoing claims 1-4, wherein the foam has urethane and urea hard-block species formed from D equivalents urethane forming isocyanate reactive species having a molecular weight < 500 g/mol, E equivalents urea forming isocyanate reactive species having a molecular weight < 500 g/mol not being water and C equivalents urea hard-block species selected from water (C) and wherein the ratio calculated as $\dfrac{D+E}{C}$ is in the range 0.6 up to 1.1, in the range 0.65 up to 1.0, or in the range 0.7 up to 0.9.

8. The foam according to any of foregoing claims, wherein the foam is a sprayed foam, a moulded foam, an injection moulded foam, a free risen foam, a free risen slabstock foam or sprayed foam.

9. The foam according to any of foregoing claims, wherein the foam has thermoplastic properties.

10. Use of the foam according to any of foregoing claims in shoe soles, shoe midsoles, orthopaedic products, as artificial leather, as mattress, as foam seals and gaskets, as elastomeric wheels and tires, as automotive seating, in upholstery applications, as floor covering, as bicycle saddles, as lightweight synthetic fibers, as sports clothing and apparel, as grips and handles, and as microcellular foam applications.

11. A process for recycling and/or remelting the thermoplastic foam according to claim 9 into non-foamed thermoplastic materials by a heat and/or compression process at temperatures above the melting temperature of the thermoplastic material of the elastomeric foam.

12. A process for recycling and/or remelting the thermoplastic foam according to claim 9 in an extruder at temperatures above the melting temperature of the thermoplastic material.

13. A process for recycling and/or remelting the elastomeric foam according to claim 12, wherein a blowing agent is present to form a foamed recycled thermoplastic foam.

14. A thermally recycled foam obtained by any of foregoing claims 11-13 having at least 1.5 times the original density of the foam, more preferably 2 times the original density of the foam, more preferably 3 times the original density of the foam, most preferably 4 times the original density of the thermoplastic elastomeric foam according to any of foregoing claims 1-9.

15. A method for making an elastomeric polyurethane-polyurea comprising water blown foam having an apparent density in the range 150-700 kg/m$^3$ measured according to ISO 845 and having a tensile strength measured according to DIN 53504 over apparent density ratio of at least 10 kPa.m$^3$/kg, the method comprising mixing at an isocyanate index in the range 75 up to 125 in situ at least following ingredients to form a reactive foam formulation:

- an isocyanate composition comprising A equivalents isocyanate compounds, said isocyanate composition having an NCO value in the range 3 up to 50 and a number average isocyanate functionality in the range of 1.8 up to 2.5,
- B equivalents isocyanate reactive compounds having a molecular weight > 500 g/mol and a functionality in the range 1.8 up to 2.5,
- C urea forming equivalents of water,
- optionally D urethane forming equivalents of low molecular weight (MW) urethane forming isocyanate reactive compounds containing hydroxyl functional groups and having a molecular weight < 500 g/mol and having a hydroxy functionality in the range 1 up to 8,
- optionally E urea forming equivalents of low molecular weight (MW) urea forming isocyanate reactive compounds containing amine functional groups and having a molecular weight < 500 g/mol and having a functionality in the range 1 up to 8, and
- at least one catalyst compound,

wherein

- C is in the range of 0.02 up to 0.08 calculated on 100 gram reactive foam formulation,
- optionally D is in the range of 0 up to 0.07 calculated on 100 gram reactive foam formulation,
- optionally D + E is greater than 0, and
- $\dfrac{D+E}{C}$ is smaller than 1.1, wherein the urea forming equivalents and urethane forming equivalents are calculated as defined in the specification.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120095122 A1

- CA 2337913 A1